# EUROPEAN PATENT APPLICATION

(11) **EP 4 358 521 A1**
(43) Date of publication of application: **24.04.2024**
(21) Application number: 23204992.4
(22) Date of filing: 20.10.2023
(51) Int. Cl.: H04N 21/2343, H04N 21/845

(54) **METHODS AND SYSTEMS FOR ENCODING OF CONTENT SEGMENTS**

(30) Priority: 21.10.2022 US 202218048698
(71) Applicant: Comcast Cable Communications LLC, Philadelphia, Pennsylvania 19103 (US)
(72) Inventor: LINTZ, Christopher, Philadelphia, 19103 (US); YARNELL, Derik, Philadelphia, 19103 (US)
(74) Representative: V.O.

(57) **Abstract**

Systems and methods are described herein for just-in-time encoding of uniquely recorded vide segments. A particular content segment can include a plurality of versions, where each version includes a different formatting characteristic. For example, the plurality of versions can include a high bit rate version, a medium bitrate version, and a low bitrate version. The system can store one of the versions of the content segment. When a user requests the content segment in a version other than the stored version, the system can retrieve the stored version from storage, and can encode the version of the content segment to generate or replicate the requested version of the content segment.

## Description

### BACKGROUND

In a cloud or network digital video recorder (DVR) system, content may be recorded or stored on a service provider's servers for the requesting user. However, a portion of this recorded or stored content may not be played by a requesting user's video player, for example, when the DVR system determines the video player can play a different quality version of the content than the stored version initially being played. Accordingly, there is a need for more efficient techniques for storage utilization in DVR systems.

### SUMMARY

The following summary presents a simplified summary of certain features. The summary is not an extensive overview and is not intended to identify key or critical elements. Systems and methods are described herein for just-in-time encoding of uniquely recorded video segments. A particular content segment can include a plurality of versions, where each version includes a different formatting characteristic. For example, the plurality of versions of particular content segment are indicated in a manifest file, or offered in any other way to a user or user device (e.g. playback device) as a possible version of the content segment to be requested. For example, the plurality of versions may include different bit rates, such as two or more of a high bit rate version, a medium bitrate version, and a low bitrate version. The system may store only one (or more), but not all possible versions of a particular content segment made available to a user, e.g. made available via a manifest file. The system can store one of the versions of the content segment. Another version may be not stored by the system. When a user or user device requests the content segment in a version other than the stored version, the system can retrieve the stored version from storage, and can encode the version of the content segment to generate or replicate the requested version of the content segment. Thus, each version of the content segment may not need to be stored. These and other features and advantages are described in greater detail below.

### BRIEF DESCRIPTION OF THE DRAWINGS

The following drawings show generally, by way of example, but not by way of limitation, various examples discussed in the present disclosure. In the drawings:
FIG. 1 shows an example system;
FIG. 2 shows an example method;
FIG. 3 shows an example method;
FIG. 4 shows an example method;
FIG. 5 shows an example method;
FIG. 6 shows an example method;
FIG. 7 shows an example computing device.

### DETAILED DESCRIPTION OF ILLUSTRATIVE EMBODIMENTS

Systems and methods are described herein for just-in-time encoding of uniquely recorded video segments. The systems and methods described herein provide for efficient storage and encoding processes for requested content segments. A user may request a content segment in a format (e.g., a bit rate) that is lower quality than the best quality format. The DVR system can identify this requested format and can cause the content segment having a higher quality format (e.g., the highest quality format) to be further encoded and sent to the user's device. Thus, the user receives the content segment in a format similar to the one requested, as the encoding process degrades the higher quality format of the content segment. Additionally, the content segment may not be stored in the requested lower quality format. This can save storage resources, while efficiently implementing encoding resources of the DVR system.

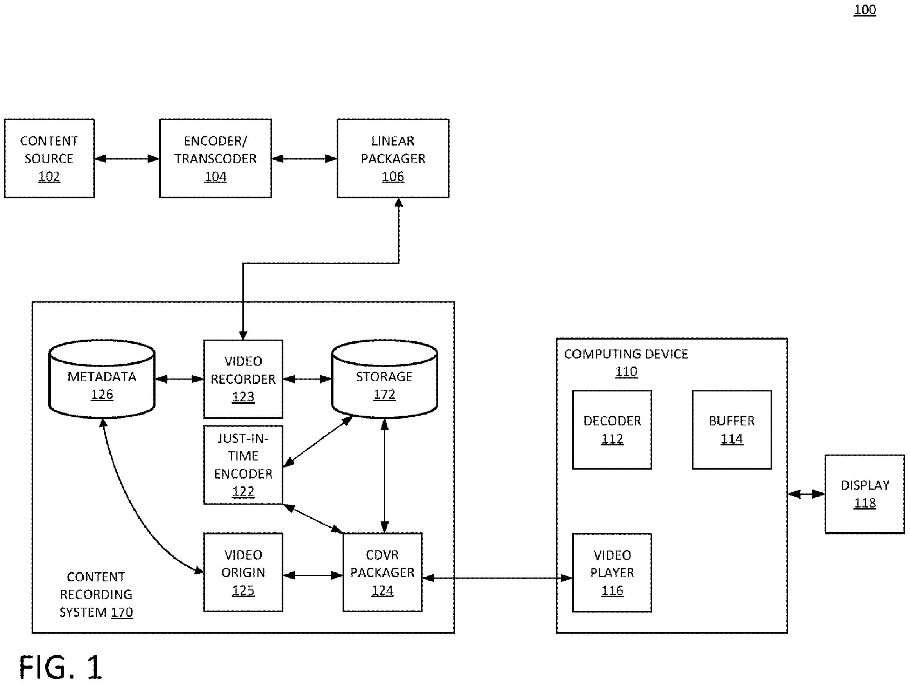

FIG. 1 shows system 100 for delivering content. The example system 100 may comprise a content source 102, an encoder/transcoder 104, a linear packager 106, a content recording system 170, and a computing device 110. The techniques for video processing described herein are applicable to any content delivery method including but not limited to Dynamic Adaptive Streaming over HTTP (DASH), HTTP Live Streaming (HLS), the quadrature amplitude modulation (QAM) standard, and/or adaptive bit rate (ABR) streaming.

The computing device 110 may comprise a television, a monitor, a laptop, a desktop, a smart phone, a set-top box, a streaming-video player, a cable modem, a gateway, a tablet, a wearable computing device, a mobile computing device, any computing device configured to receive and/or render content, the like, and/or any combination of the foregoing. The computing device 110 may comprise a decoder 112, a buffer 114, and a video player 116. The computing device 110 (e.g., the video player 116) may be communicatively connected to a display 118. The display 118 may be a separate and discrete component from the computing device 110, such as a television display connected to a set-top box. The display 118 may be integrated with the computing device 110. The decoder 112, the video player 116, the buffer 114, and the display 118 may be realized in a single device, such as a laptop or mobile device. The decoder 112 may decompress/decode encoded video data. The encoded video data may be received from the encoder/transcoder 104, the linear packager 106, or the content recording system 170.

The content source 102 may comprise a source feed of content from a provider. For example, the content source 102 may comprise a broadcast source, a service provider (e.g., a cable television service provider), a headend, a video on-demand server, a cable modem termination system, the like, and/or any combination of the foregoing. The content source 102 may send content to the encoder/transcoder 104. The content may comprise for example, a program, a television show, a movie, a sports event broadcast, or the like. The content may comprise video frames or other images. For example, the content may comprise video frames in a Moving Picture Experts Group (MPEG) Single Program Transport Stream (MPEG-SPTS). The video frames may comprise pixels. A pixel may comprise the smallest controllable element of a video frame. The video frame may comprise bits for controlling each associated pixel. A portion of the bits for an associated pixel may control a luma value (e.g., light intensity) of each associated pixel. A portion of the bits for an associated pixel may control one or more chrominance value (e.g., color) of the pixel.

The content source 102 may receive requests for the content from the encoder/transcoder 104, the packager 106, the computing device 110, or the content recording system 170. The content source 102 may send content to the encoder/transcoder 104 based on a request for video from the encoder/transcoder 104, the packager 106, the computing device 110, or the content recording system 170. The content may comprise uncompressed video data or a content stream such as an MPEG-SPTS.

The encoder/transcoder 104 may comprise an encoder, which may encode uncompressed video data received from the content source 102. The terms transcoder and encoder may be used interchangeably herein. The terms transcode and encode may be used interchangeably herein. The encoder/transcoder 104 may receive content from the content source 102. The content may be in any one of a variety of formats, such as, for example, H.264, MPEG-4 Part 2, or MPEG-2. The encoder/transcoder 104 may convert the content from one video format to another video format, such as one format compatible with the playback devices of the service provider's users (e.g., computing device 110). The encoder/transcoder 104 may additionally segment the content into a plurality of segments. For example, content may be segmented into a series of 2-second segments.

When uncompressed video data is received, the encoder may encode the video (e.g., into a compressed format) using a compression technique prior to transmission. The content source 102 and the encoder/transcoder 104 may be co-located at a premises, located at separate premises, or associated with separate instances in the cloud. The encoder 104 may comprise any type of encoder including but not limited to: H.264/MPEG-AVC, H.265/MPEG-HEVC, MPEG-5 EVC, H.266/MPEG-VVC, AV1, VP9, Global motion compensation (GMC), etc. The encoder/transcoder 104 may transcode the content into one or more output streams 140. The one or more output streams 140 may comprise video encoded with different resolutions and/or different bit rates.

The linear packager 106 may receive the content from the encoder/transcoder 104 or the content recording system 170. For example, the linear packager 106 may receive the one or more output streams from the encoder/transcoder 104. The linear packager 106 may determine how the content is to be segmented and put together for delivery to the content recording system 170.

The packager 106 may generate one or more ABR streams in different ABR streaming formats. The one or more ABR streams may comprise segments or fragments of video and the manifest. The manifest may indicate availability of the ABR stream and segments/fragments and information for requesting the segments/fragments (e.g., via a URL). The packager 106 may send the one or more ABR streams to the content recording system 170.

The content recording system 170 may comprise one or more computing devices such as a just-in-time encoder 122, a video recorder 123, storage 172, cDVR packager 124, video origin 125, and metadata storage 126.
The video recorder 123 may receive content from the linear packager 106 and may record or store the content in the content recording system 170. For example, the video recorder 123 may record the content from the linear packager 106, and may store the recorded content in storage 172. Additionally, the video recorder 123 manages metadata associated with the recorded content. The video recorder 123 may extract or generate metadata for a recorded content segment and store the metadata within metadata storage 126. The video recording may determine content segments to be just-in-time encoded and not stored to the storage system, or to alternatively store the segments to the storage system. For segments that are to be just-in-time-encoded, signals in the manifest via a Supplemental Property can define the range of segments (e.g., which the video recorder 123 can generate and insert into the manifest).

The cDVR packager 124 may package content segments for delivery to the computing device 110. For example, the cDVR packager 124 may receive a request for content from the computing device 110, and may retrieve content segments according to the request. The cDVR packager 124 may determine how the content is to be segmented and put together for delivery to and eventual playback by the computing device 110. As part of this process, the cDVR packager 124 may segment the content (such as in the event that the content has not yet been segmented) or may re-segment the content (such as in the event that the content had been previously segmented). The cDVR packager 124 may additionally insert one or more cues or markers into the content segments at which one or more additional segments, such as segments comprising an advertisement, may be inserted by an upstream client, server, or logical module, such as a component of the content recording system 170.

The video origin 125 may serve requests for the cDVR packager 124. The video origin 125 may also, as discussed in more detail below, determine whether a requested content segment from the computing device 110 is available for just-in-time encoding.

The video origin 125 may also generate and send manifests associated with a content profile or particular content segments. The video origin 125 may create a manifest file associated with the content. For example, the manifest may comprise a DASH manifest. The manifest may comprise information describing various aspects of the associated content that may be useful for the computing device 110 to playback the content and/or for the content recording system 170 to store and retrieve the content. For example, the manifest may indicate the availability of the segments comprising the content, the length of each segment, the number of segments, and/or the proper ordering of the segments necessary to cause playback of the content. The manifest may further include a network location (e.g., a hyper-text transfer protocol (HTTP) uniform resource locater (URL) link or other universal resource identifier (URI)) for each segment from which the segment may be downloaded, accessed, or retrieved. For example, the network location may indicate a location in storage 172.

The network locations included within the manifest may indicate more than one location or source. For example, the network location for segments corresponding to the content may reference a storage location while the network location for segments corresponding to an inserted advertisement may reference a location from outside the system 100 (e.g., at an advertising server). The manifest may describe multiple versions (e.g., different quality levels) of the content, including corresponding information on those segments. For example, manifest may describe multiple bit rate and/or resolution versions of the content. The manifest may be provided, such as by the cDVR packager 124, to the computing device 110 in response to a request to receive stored content. The computing device 110 may use the manifest file to determine the segments required to play the content or a segment/portion of the content and subsequently download the required segments using the network locations specified in the manifest file.

The content delivery system 170 (e.g., the cDVR packager 124) may receive a request for content from the computing device 110. The request may be sent via HTTP. The cDVR packager 124 may authorize/authenticate the request and/or the computing device 110 from which the request originated. The request for content may comprise a request for a channel, a recorded program, a video on-demand asset, a website address, a video asset associated with a streaming service, the like, and/or any combination of the foregoing. The cDVR packager 124 may send the request to the video origin 125, the video recorder 123, the linear packager 106, the encoder 104, the content source 102, or the like. The cDVR packager 124 may send the requested content to the computing device 110.

The just-in-time encoder 122 may comprise an encoder, which may encode compressed video data received from storage 172. The just-in-time encoder 122 may receive content segment(s) from storage 172. The content segments may be in an already compressed format, such as a format of high quality intended for playback by the computing device 110. The just-in-time encoder 122 may convert the content from one video format to another video format, such as from a high quality format to a medium or low quality format.

When video data is received, the just-in-time encoder 122 may encode the video (e.g., into a compressed format) using a compression technique prior to transmission. The content source 102 and the just-in-time encoder 122 may be co-located at a premises, located at separate premises, or associated with separate instances in the cloud. The just-in-time encoder 122 may comprise any type of encoder including but not limited to: H.264/MPEG-AVC, H.265/MPEG-HEVC, MPEG-5 EVC, H.266/MPEG-VVC, AV1, VP9, GMC, etc. In some cases, the just-in-time encoder 122 can be the encoder/transcoder 104. In other cases, the just-in-time encoder 122 can be separate from the encoder/transcoder 104. The just-in-time encoder 122 may transcode the content segments 174 into content segments with a different format than the format in which the content segments 174 are received in. For example, the differently formatted content segments may comprise video encoded with different resolutions and/or different bit rates compared to the content segments received by the just-in-time encoder 122.

The content recording system 170 (e.g., via the cDVR packager 124) may receive from the computing device 110 a request for a content segment. The request can include a requested format the content segment is to be provided in. For example, the requested format can include a quality, a bit rate, a resolution, and the like. A quality can include a high bit rate (HBR) quality, a medium bit rate (MBR) quality, and a low bit rate (LBR) quality. The HBR quality can be associated with, for example, a resolution of 1280x720 at 60 frames per second (fps), and/or a bit rate of 3.49 Mbps. The MBR quality can be associated with, for example, a resolution of 1280x720 at 30 fps, and/or a bit rate of 2.2 Mbps. The LBR quality can be associated with, for example, a resolution of 512x288 at 30 fps, and/or a bit rate of 689 Kbps.

The content recording system 170 (e.g., via the video origin 125) may determine the requested format from the request. For example, the request may include a content segment identifier, a representation identifier for the requested format, and the like. The video origin 125 may determine whether the requested format is available for just-in-time encoding. For example, in some cases the video origin 125 may have access to a manifest associated with the content segment. In some cases, the manifest may be received from the packager 106, or the video recorder 123. The manifest may include an indication that the requested format of the content segment is available for just-in-time encoding. For example, the manifest may include a Supplemental Property field, which can indicate the availability of just-in-time encoding for the content segment. In some cases, the Supplemental Property field may be generated and inserted into the manifest via the video recorder 123. For example, the Supplemental Property field may include a list of content segments that are stored in the system 100 (e.g., the storage 172, and the like). Alternatively, the Supplemental Property field may include a list of content segments that are not stored in the system 100. An example manifest entry for a content segment is provided below:
<Representation id="root_audio_video1" bandwidth="689200" width="448" height="336" frameRate="30000/1001" codecs="avc1.4d4015,mp4a.40.5" audioSamplingRate="24000">
<SupplementalProperty schemeIdUri="urn:comcast:cdvr:jitt-range" value="segnum:31-1800,segnum:60-500"/>
<SubRepresentation bandwidth="571600" codecs="avc1.4d4015" contentComponent=" 101" />
<SubRepresentation bandwidth=" 117600" codecs="mp4a.40.5" contentComponent="102" />
</Representation>

In some cases, the video origin 125 may access a recording metadata store 126 which may store metadata associated with the content segment. The metadata can include a recording identifier, which can indicate the format a given content segment is recorded and stored in.

Just-in-time encoding may refer to encoding a content segment to modify a format of a content segment into a different format. For example, encoding a content segment of a HBR may modify the format of the content segment to be MBR or LBR, or substantially similar to MBR or LBR. This may be particularly beneficial where, for instance, the content segment is not stored in the MBR or LBR, or rarely used formats.

If the video origin 125 determines the requested content segment is available for just-in-time encoding for the requested format, the video origin 125 may send a request to the just-in-time encoder 122 to just-in-time encode the content segment. For example, the request may be a "GET" request, which may identify the content segment, the format the content segment will be encoded to (e.g., MBR), the format of the content segment that is to be encoded, and the like. An example request to the just-in-time encoder 122 is depicted below:
GET/recording_id+A&period_id+DEF&rep=video1&seg_num=31&src_rep=video0

The just-in-time encoder 122 may retrieve the content segment for encoding. For example, the just-in-time encoder 122 may request the content segment from storage. For example, the just-in-time encoder 122 may request the content segment from the video origin 125, storage 172, and the like. In some cases, the request may be a "GET" request. An example request from the just-in-time encoder 122 for the content segment is provided below:
GET/segments/A/DEF/video1/31.ts

The content segment may be stored in a particular format. For example, the content segment may be stored in a HBR format. Thus, the content segment may be stored in a compressed or encoded format (e.g., via encoder/transcoder 104 or video recorder 123). In some cases, the content segment may be stored as the highest possible quality format (e.g., highest possible bit rate, highest possible resolution, highest possible frame rate, etc.).

The content segment may then be encoded by the just-in-time encoder 122. For example, the content segment may be encoded via H.264/MPEG-AVC, H.265/MPEG-HEVC, MPEG-5 EVC, H.266/MPEG-VVC, AV1, VP9, GMC and the like. The encoding may modify the format of the content segment. For example, the encoding may decrease the resolution, the bit rate, the frame rate, and the like.

In some cases, the just-in-time encoder 122 may encode the content segment, such that the format of the encoded content segment comprises the format requested by the computing device 110. For example, the encoder 122 may receive the content segment in an HBR format. The encoder 122 may encode the HBR content segment, which may generate a MBR or a LBR content segment. In some cases, the encoding may substantially mimic a content segment in the requested format. For example, encoding the content segment may result in a format with a Video Multimethod Assessment Fusion (VMAF) score within 3 points of the requested format for the content segment (e.g., MBR format).

In some cases, the just-in-time encoder 122 may concatenate the content segment with additional data. For example, in cases where the content segment is a DASH segment, the just-in-time encoder 122 may request, or extract, a presentation timestamp (PTS) from an MP4 atom associated with the content segment (e.g., prior to encoding the content segment from the content source 102). The PTS may be stored in the system 100, such as by the content recording system 170 (e.g., storage 172 or metadata storage 126). The just-in-time encoder 122 may receive the PTS and may concatenate the PTS with the content segment. This concatenated content segment may then be encoded. This allows for successful encoding of an individual DASH content segment that fits within the segment timeline as if it were a normal encoded segment at record time. Additionally, DASH initialization content segments may be cached for the given representation on initial encode. This speeds up overall latency for subsequent segment for the same representation.

The just-in-time encoder 122 may send the encoded content segment to the cDVR packager 124. The cDVR packager 124 may send the encoded content segment to the computing device 110. The computing device 110 may implement the encoded content as playback. Thus, the content segment may not be stored in the system 100 prior to playback. Instead, the computing device 110 may receive, in response to a request for a content segment, the content segment that is just-in-time encoded. The content segment may thus be stored in the system as only a subset of the various formats the system 100 is capable of implementing.

In some cases, the video origin 125 may refrain from requesting just-in-time encoding. For example, the video origin 125 may receive a request for a content segment (e.g., via cDVR packager 124). The video origin 125 may determine the requested content segment is not available for just-in-time encoding. For example, the video origin 125 may access a manifest, and may determine the content segment is stored in the requested format, such as a HBR format. In another example, the video origin 125 may access the metadata store 126 and determine the content segment is recorded in the requested format. The video origin 125 may refrain from requesting the content segment to be just-in-time encoded.

In some cases, the video origin 125 may determine the computing device 110 is implementing hot playback. Hot playback may refer to when a computing device records and plays back content concurrently. In cases where the video origin 125 determines a computing device 110 is implementing hot playback, the video origin 125 may refrain from requesting a content segment requested by the computing device 110 to be just-in-time encoded. The video origin 125 may request, or cause to be requested via the cDVR packager 124, the content segment from storage, for example from storage 172.

The video origin 125 may determine the implementation of hot playback by monitoring previously requested content segments associated with the currently requested content segment. For example, the video origin 125 may detect historical video playback session data (e.g., stored at the content recording system 170) associated with a content profile. The session data may include a log of content segments of the profile requested by the computing device (e.g., within a predefined time period), and corresponding requested formats for the content segments. The video origin 125 may compare the formats requested of the previously requested content segments of the profile to the currently requested format for the currently requested content segment. Based on a predefined threshold (e.g., number of matched formats in a row), the video origin 125 may determine hot playback is being implemented and may refrain from requesting just-in-time encoding for the currently requested content segment. The video origin 125 can inform the video recorder 123 of the hot playback status for the computing device 110. The video recorder 123 can refrain from adding indications of just-in-time encoding availability into an associated manifest (e.g., via a Supplemental Property field) based on the information received from the video origin 125.

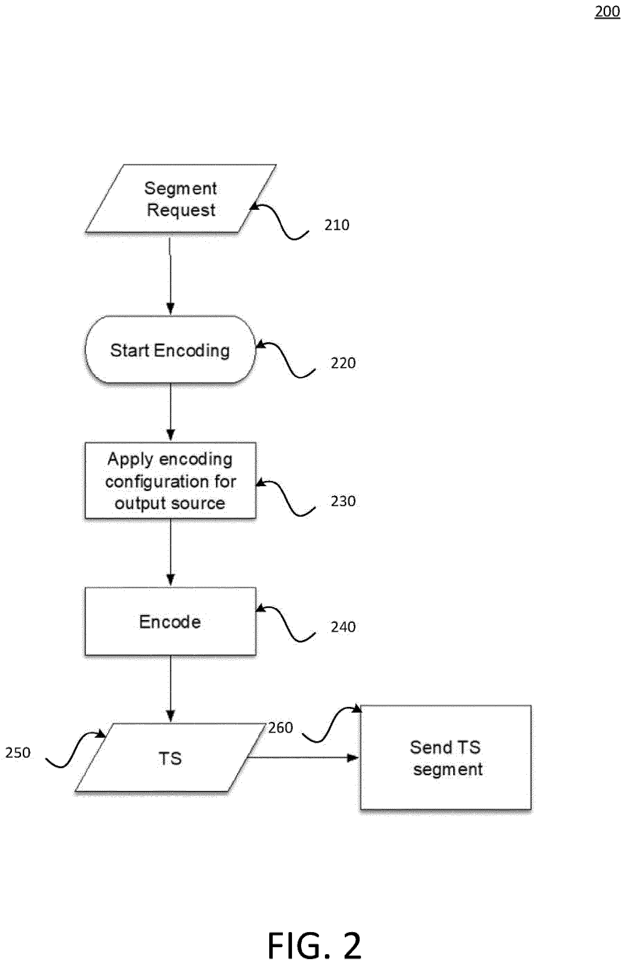

FIG. 2 shows an example method 200. The method 200 of FIG. 2 may be performed by a just-in-time encoder described herein. While each step in the method 200 of FIG. 2 is shown and described separately, multiple steps may be executed in a different order than what is shown, in parallel with each other, or concurrently with each other.

At step 210, a segment request may be received. In some cases, the request may comprise an indication of a requested format of the content segment of a plurality of formats for the content segment. In some cases, the requested format may comprise a MBR format, or a LBR format.

At step 220, encoding of a content segment may be started. At step 230, an encoding configuration for an output source may be applied. The encoding configuration may include H.264/MPEG-AVC, H.265/MPEG-HEVC, MPEG-5 EVC, H.266/MPEG-VVC, AV1, VP9, GMC and the like. At step 240, the content segment may be encoded.

At step 250, a content segment may be generated. In some cases, the content segment may be a transport stream (TS) content segment. In some cases, the encoding may substantially mimic a content segment in the requested format. For example, encoding the content segment may result in a format with a VMAF score within 3 points of the requested format for the content segment. At step 260, the encoded content segment may be sent. The encoded content segment may be sent to the requesting entity, such as a video origin or a computing device for playback.

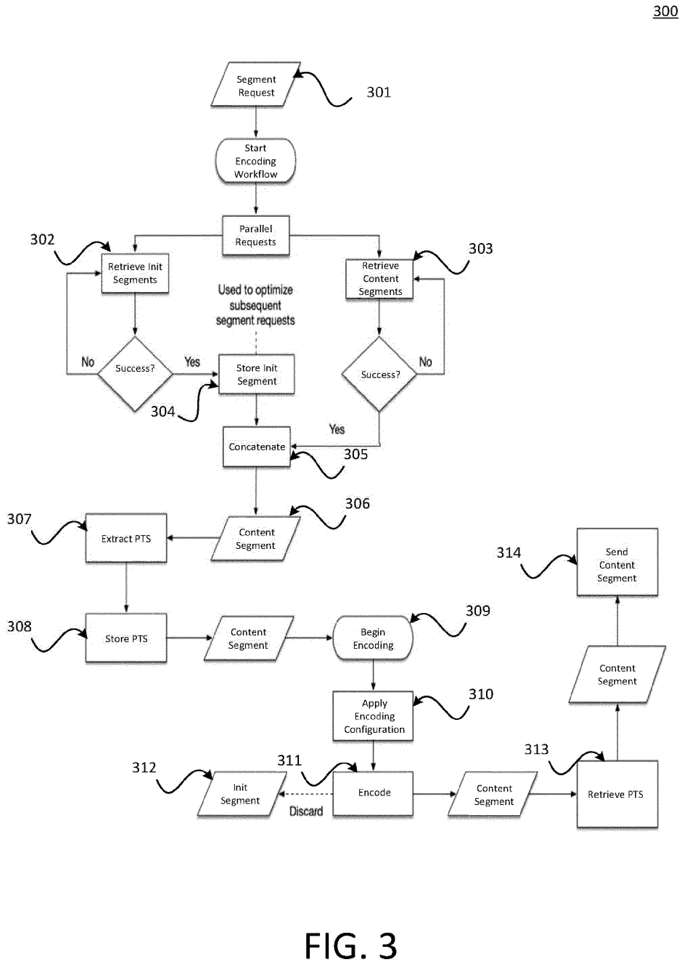

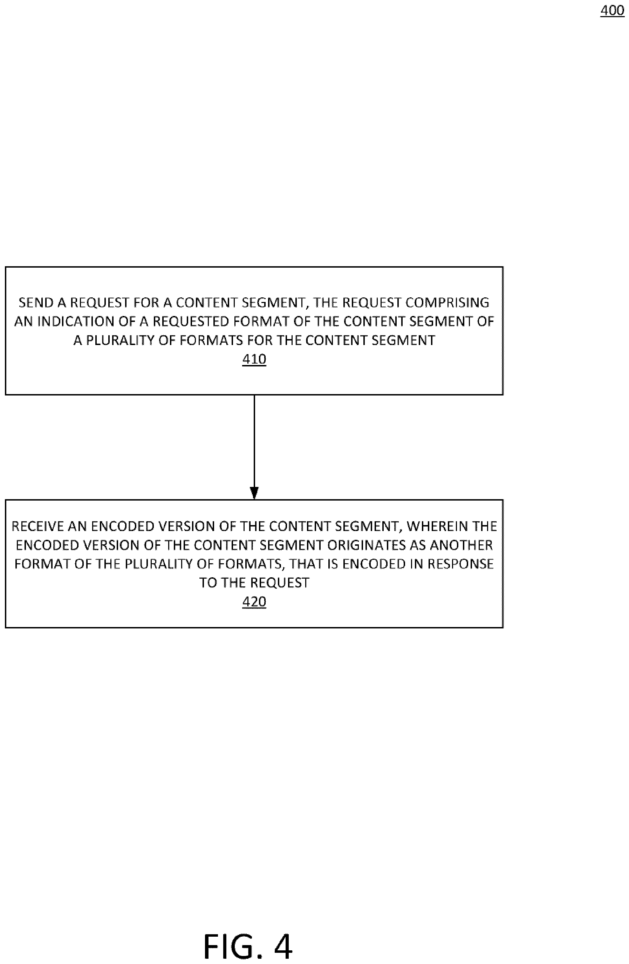

FIG. 3 shows an example method 300. The method 300 of FIG. 3 may be performed by a just-in-time encoder described herein. While each step in the method 300 of FIG. 4 is shown and described separately, multiple steps may be executed in a different order than what is shown, in parallel with each other, or concurrently with each other.

At step 301, a segment request may be received. In some cases, the request may comprise an indication of a requested format of the content segment of a plurality of formats for the content segment. In some cases, the requested format may comprise a MBR format, or a LBR format. At step 302, a DASH initialization segment may be received, for example, from storage or another component of a content recording system. At step 303, a content segment (e.g., a DASH segment) may be received, for example, from storage or another component of a content recording system. At step 304, the initialization segment may be cached. At step 305, the initialization segment and the content segment may be concatenated. At step 306, the concatenation may generate a concatenated content segment.

At step 307, a presentation time stamp (PTS) may be extracted from the concatenated content segment. For example, the PTS may be extracted from SIDX/TFDT fields. At step 308, the PTS may be stored. At step 309, the encoding process may begin. At step 310, an encoding configuration for an output source may be applied. The encoding configuration may include H.264/MPEG-AVC, H.265/MPEG-HEVC, MPEG-5 EVC, H.266/MPEG-VVC, AV1, VP9, GMC and the like. At step 311, the content segment may be encoded.

At step 312, an initialization segment of the encoded content segment may be removed (e.g., an m4s init segment). At step 313, the cached PTS may be retrieved and set in the SIDX/TFDT fields of the content segment. At step 314, the encoded content segment may be sent. The encoded content segment may be sent to the requesting entity, such as a component of a content recording system or a computing device for playback.

FIG. 4 shows an example method 400. The method 400 of FIG. 4 may be performed by any of the devices described herein. While each step in the method 400 of FIG. 4 is shown and described separately, multiple steps may be executed in a different order than what is shown, in parallel with each other, or concurrently with each other. At step 410, the system may send a request for a content segment. The request may comprise an indication of a requested format of the content segment of a plurality of formats for the content segment. In some cases, the requested format may comprise a MBR format, or a LBR format. In some cases, the content segment may not be stored in the requested format.

At step 420, the system may receive an encoded version of the content segment. The encoded version of the content segment may originate as another format of the plurality of formats, that is encoded in response to the request. In some cases, the content segment may be encoded via H.264/MPEG-AVC, H.265/MPEG-HEVC, MPEG-5 EVC, H.266/MPEG-VVC, AV1, VP9, GMC and the like. In some cases, the encoding may substantially mimic a content segment in the requested format. For example, encoding the content segment may result in a format with a VMAF score within 3 points of the requested format for the content segment. In some cases, the content segment may be stored in the other format. In some cases, the content segment may not be stored in the requested format. In some cases, the other format may comprise a HBR format.

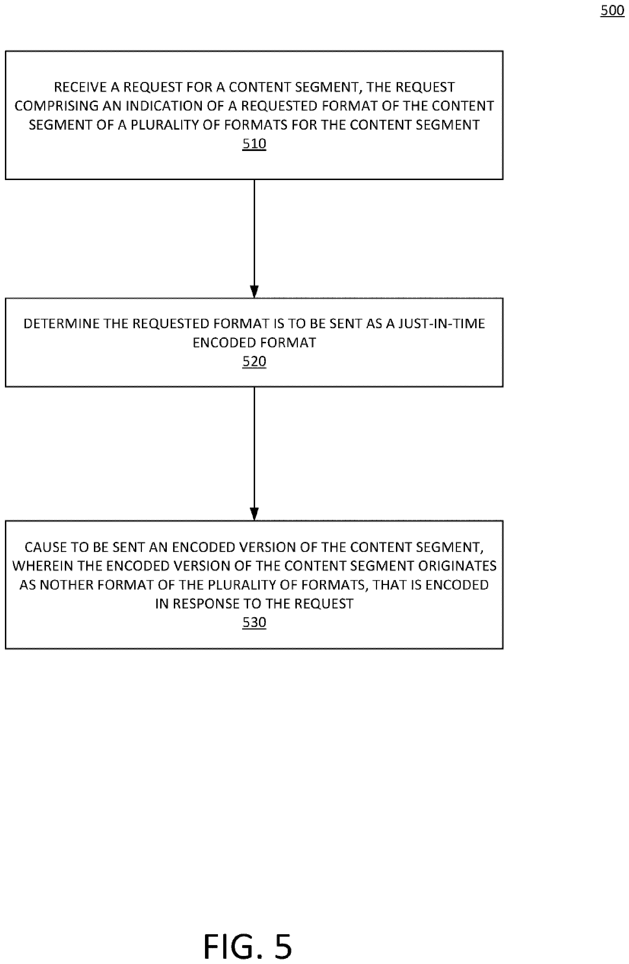

FIG. 5 shows an example method 500. The method 500 of FIG. 5 may be performed by any of the devices described herein. While each step in the method 500 of FIG. 5 is shown and described separately, multiple steps may be executed in a different order than what is shown, in parallel with each other, or concurrently with each other. At step 510, a system may receive a request for a content segment. In some cases, the request may comprise an indication of a requested format of the content segment of a plurality of formats for the content segment. In some cases, the requested format may comprise a MBR format, or a LBR format.

At step 520, the system may determine the requested format is to be sent as a just-in-time encoded format. In some cases, determining the format is to be sent as the just-in-time encoded format may further comprise determining the content segment is not stored in the requested format. In some cases, the determination may occur via a supplemental property field of the manifest.

At step 530, the system may cause to be sent an encoded version of the content segment. In some cases, the encoded version of the content segment may originate as another format of the plurality of formats, that is encoded in response to the request. In some cases, the content segment may be encoded via H.264/MPEG-AVC, H.265/MPEG-HEVC, MPEG-5 EVC, H.266/MPEG-VVC, AV1, VP9, GMC and the like. In some cases, the encoding may substantially mimic a content segment in the requested format. For example, encoding the content segment may result in a format with a VMAF score within 3 points of the requested format for the content segment. In some cases, the content segment may be stored in the other format. In some cases, the content segment may not be stored in the requested format. In some cases, the other format may comprise a HBR format. In some cases, a video origin may direct a cDVR packager to request just-in-time encoding of the content segment.

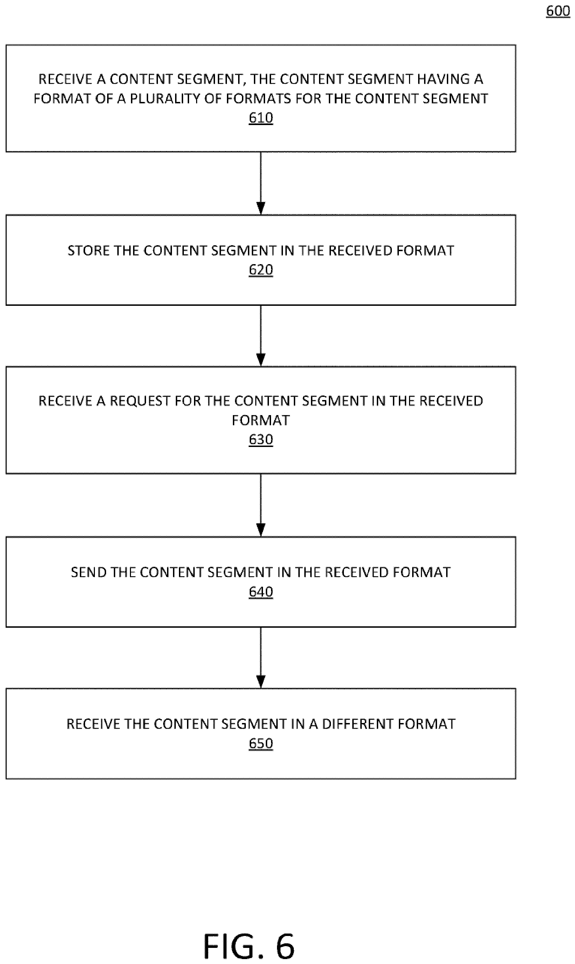

FIG. 6 shows an example method 600. The method 600 of FIG. 6 may be performed by any of the devices described herein. While each step in the method 600 of FIG. 6 is shown and described separately, multiple steps may be executed in a different order than what is shown, in parallel with each other, or concurrently with each other. At step 610, a content segment may be received. The content segment may be received in a particular format. For example, the content segment can be received in a HBR format. At step 620, the content segment may be stored. The content segment may be stored in the particular format. At step 630, a request for the content segment may be received. The request for the content segment may indicate the particular content segment, as well as the particular format in which the content segment is stored in. In some cases, the request may be received from a just-in-time encoder. At step 640, the content segment may be sent based on the request. In some cases, the content segment may be sent to a just-in-time encoder. At Step 650, the content segment may be received in a format different than the requested format. For example, in some cases, the content segment may be encoded via H.264/MPEG-AVC, H.265/MPEG-HEVC, MPEG-5 EVC, H.266/MPEG-VVC, AV1, VP9, GMC and the like. In some cases, the different format may be a MBR or LBR format when received. In some cases, the content segment may be stored in the different format.

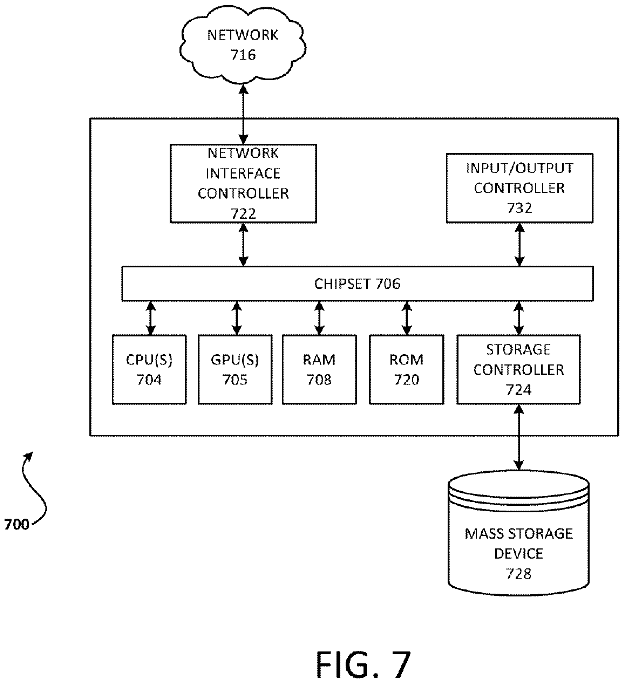

FIG. 7 depicts a computing device 700 that may be used in various aspects, such as the servers, encoders, computing device, and other devices depicted in FIG. 1. With regard to the example architectures of FIG. 1, the devices may each be implemented in an instance of a computing device 700 of FIG. 7. The computer architecture shown in FIG. 7 shows a conventional server computer, workstation, desktop computer, laptop, tablet, network appliance, PDA, e-reader, digital cellular phone, or other computing node, and may be utilized to execute any aspects of the computers described herein, such as to implement the methods described in relation to FIGS. 2-6.

The computing device 700 may include a baseboard, or "motherboard," which is a printed circuit board to which a multitude of components or devices may be connected by way of a system bus or other electrical communication paths. One or more central processing units (CPUs) 704 may operate in conjunction with a chipset 706. The CPU(s) 704 may be standard programmable processors that perform arithmetic and logical operations necessary for the operation of the computing device 700.

The CPU(s) 704 may perform the necessary operations by transitioning from one discrete physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits including registers, adders-subtractors, arithmetic logic units, floating-point units, and the like.

The CPU(s) 704 may be augmented with or replaced by other processing units, such as GPU(s) 705. The GPU(s) 705 may comprise processing units specialized for but not necessarily limited to highly parallel computations, such as graphics and other visualization-related processing.

A chipset 706 may provide an interface between the CPU(s) 704 and the remainder of the components and devices on the baseboard. The chipset 706 may provide an interface to a random access memory (RAM) 708 used as the main memory in the computing device 700. The chipset 706 may further provide an interface to a computer-readable storage medium, such as a read-only memory (ROM) 720 or non-volatile RAM (NVRAM) (not shown), for storing basic routines that may help to start up the computing device 700 and to transfer information between the various components and devices. ROM 720 or NVRAM may also store other software components necessary for the operation of the computing device 700 in accordance with the aspects described herein.

The computing device 700 may operate in a networked environment using logical connections to remote computing nodes and computer systems through local area network (LAN) 716. The chipset 706 may include functionality for providing network connectivity through a network interface controller (NIC) 722, such as a gigabit Ethernet adapter. A NIC 722 may be capable of connecting the computing device 700 to other computing nodes over a network 716. It should be appreciated that multiple NICs 722 may be present in the computing device 700, connecting the computing device to other types of networks and remote computer systems.

The computing device 700 may be connected to a mass storage device 728 that provides non-volatile storage for the computer. The mass storage device 728 may store system programs, application programs, other program modules, and data, which have been described in greater detail herein. The mass storage device 728 may be connected to the computing device 700 through a storage controller 724 connected to the chipset 706. The mass storage device 728 may consist of one or more physical storage units. A storage controller 724 may interface with the physical storage units through a serial attached SCSI (SAS) interface, a SATA interface, a fiber channel (FC) interface, or other type of interface for physically connecting and transferring data between computers and physical storage units.

The computing device 700 may store data on a mass storage device 728 by transforming the physical state of the physical storage units to reflect the information being stored. The specific transformation of a physical state may depend on various factors and on different implementations of this description. Examples of such factors may include, but are not limited to, the technology used to implement the physical storage units and whether the mass storage device 728 is characterized as primary or secondary storage and the like.

For example, the computing device 700 may store information to the mass storage device 728 by issuing instructions through a storage controller 724 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computing device 700 may further read information from the mass storage device 728 by detecting the physical states or characteristics of one or more particular locations within the physical storage units.

In addition to the mass storage device 728 described herein, the computing device 700 may have access to other computer-readable storage media to store and retrieve information, such as program modules, data structures, or other data. It should be appreciated by those skilled in the art that computer-readable storage media may be any available media that provides for the storage of non-transitory data and that may be accessed by the computing device 700.

By way of example and not limitation, computer-readable storage media may include volatile and non-volatile, transitory computer-readable storage media and non-transitory computer-readable storage media, and removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage, other magnetic storage devices, or any other medium that may be used to store the desired information in a non-transitory fashion.

A mass storage device, such as the mass storage device 728 depicted in FIG. 7, may store an operating system utilized to control the operation of the computing device 700. The operating system may comprise a version of the LINUX operating system. The operating system may comprise a version of the WINDOWS SERVER operating system from the MICROSOFT Corporation. According to further aspects, the operating system may comprise a version of the UNIX operating system. Various mobile phone operating systems, such as IOS and ANDROID, may also be utilized. It should be appreciated that other operating systems may also be utilized. The mass storage device 728 may store other system or application programs and data utilized by the computing device 700.

The mass storage device 728 or other computer-readable storage media may also be encoded with computer-executable instructions, which, when loaded into the computing device 700, transforms the computing device from a general-purpose computing system into a special-purpose computer capable of implementing the aspects described herein. These computer-executable instructions transform the computing device 700 by specifying how the CPU(s) 704 transition between states, as described herein. The computing device 700 may have access to computer-readable storage media storing computer-executable instructions, which, when executed by the computing device 700, may perform the methods described in relation to FIGS. 2-6.

A computing device, such as the computing device 700 depicted in FIG. 7, may also include an input/output controller 732 for receiving and processing input from a number of input devices, such as a keyboard, a mouse, a touchpad, a touch screen, an electronic stylus, or other type of input device. Similarly, an input/output controller 732 may provide output to a display, such as a computer monitor, a flat-panel display, a digital projector, a printer, a plotter, or other type of output device. It will be appreciated that the computing device 700 may not include all of the components shown in FIG. 7, may include other components that are not explicitly shown in FIG. 7, or may utilize an architecture completely different than that shown in FIG. 7.

As described herein, a computing device may be a physical computing device, such as the computing device 700 of FIG. 7. A computing node may also include a virtual machine host process and one or more virtual machine instances. Computer-executable instructions may be executed by the physical hardware of a computing device indirectly through interpretation and/or execution of instructions stored and executed in the context of a virtual machine.

It is to be understood that the methods and systems described herein are not limited to specific methods, specific components, or to particular implementations. It is also to be understood that the terminology used herein is for the purpose of describing particular embodiments only and is not intended to be limiting.

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of" and is not intended to convey an indication of a preferred or ideal embodiment. "Such as" is not used in a restrictive sense, but for explanatory purposes.

Components are described that may be used to perform the described methods and systems. When combinations, subsets, interactions, groups, etc., of these components are described, it is understood that while specific references to each of the various individual and collective combinations and permutations of these may not be explicitly described, each is specifically contemplated and described herein, for all methods and systems. This applies to all aspects of this application including, but not limited to, operations in described methods. Thus, if there are a variety of additional operations that may be performed it is understood that each of these additional operations may be performed with any specific embodiment or combination of embodiments of the described methods.

The present methods and systems may be understood more readily by reference to the following detailed description of preferred embodiments and the examples included therein and to the Figures and their descriptions.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Embodiments of the methods and systems are described herein with reference to block diagrams and flowchart illustrations of methods, systems, apparatuses and computer program products. It will be understood that each block of the block diagrams and flowchart illustrations, and combinations of blocks in the block diagrams and flowchart illustrations, respectively, may be implemented by computer program instructions. These computer program instructions may be loaded on a general-purpose computer, special-purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that may direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

The various features and processes described herein may be used independently of one another, or may be combined in various ways. All possible combinations and subcombinations are intended to fall within the scope of this disclosure. In addition, certain methods or process blocks may be omitted in some implementations. The methods and processes described herein are also not limited to any particular sequence, and the blocks or states relating thereto may be performed in other sequences that are appropriate. For example, described blocks or states may be performed in an order other than that specifically described, or multiple blocks or states may be combined in a single block or state. The example blocks or states may be performed in serial, in parallel, or in some other manner. Blocks or states may be added to or removed from the described example embodiments. The example systems and components described herein may be configured differently than described. For example, elements may be added to, removed from, or rearranged compared to the described example embodiments.

It will also be appreciated that various items are illustrated as being stored in memory or on storage while being used, and that these items or portions thereof may be transferred between memory and other storage devices for purposes of memory management and data integrity. Alternatively, in other embodiments, some or all of the software modules and/or systems may execute in memory on another device and communicate with the illustrated computing systems via inter-computer communication. Furthermore, in some embodiments, some or all of the systems and/or modules may be implemented or provided in other ways, such as at least partially in firmware and/or hardware, including, but not limited to, one or more application-specific integrated circuits ("ASICs"), standard integrated circuits, controllers (e.g., by executing appropriate instructions, and including microcontrollers and/or embedded controllers), field-programmable gate arrays ("FPGAs"), complex programmable logic devices ("CPLDs"), etc. Some or all of the modules, systems, and data structures may also be stored (e.g., as software instructions or structured data) on a computer-readable medium, such as a hard disk, a memory, a network, or a portable media article to be read by an appropriate device or via an appropriate connection. The systems, modules, and data structures may also be transmitted as generated data signals (e.g., as part of a carrier wave or other analog or digital propagated signal) on a variety of computer-readable transmission media, including wireless-based and wired/cable-based media, and may take a variety of forms (e.g., as part of a single or multiplexed analog signal, or as multiple discrete digital packets or frames). Such computer program products may also take other forms in other embodiments. Accordingly, the present invention may be practiced with other computer system configurations.

While the methods and systems have been described in connection with preferred embodiments and specific examples, it is not intended that the scope be limited to the particular embodiments set forth, as the embodiments herein are intended in all respects to be illustrative rather than restrictive.

Unless otherwise expressly stated, it is in no way intended that any method set forth herein be construed as requiring that its operations be performed in a specific order. Accordingly, where a method claim does not actually recite an order to be followed by its operations or it is not otherwise specifically stated in the claims or descriptions that the operations are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

Here follows a list of clauses highlighting aspects of the disclosure
Clause 1: A method comprising:
   sending a request for a content segment, the request comprising an indication of a requested format of the content segment of a plurality of formats for the content segment; and
   receiving an encoded version of the content segment, wherein the encoded version of the content segment originates as another format of the plurality of formats, that is encoded in response to the request.
Clause 2: The method of any preceding clause, e.g. clause 1, wherein the requested format comprises a medium bit rate (MBR) format, or a low bit rate (LBR) format.
Clause 3: The method of any preceding clause, e.g. clause 1, wherein the other format comprises a high bit rate (HBR) format.
Clause 4: The method of any preceding clause, e.g. clause 1, wherein the content segment is not stored in the requested format.
Clause 5: The method of any preceding clause, e.g. clause 1, wherein the content segment is stored in the other format.
Clause 6: A method, performed alone or in combination with any of the preceding clauses, the method comprising:
   receiving a request for a content segment, the request comprising an indication of a requested format of the content segment of a plurality of formats for the content segment;
   determining the requested format is to be sent as a just-in-time encoded format; and
   causing to be sent an encoded version of the content segment, wherein the encoded version of the content segment originates as another format of the plurality of formats, that is encoded in response to the request.
Clause 7: The method of any preceding clause, e.g. clause 6, wherein determining the format is to be sent as the just-in-time encoded format further comprises determining the content segment is not stored in the requested format.
Clause 8: The method of any preceding clause, e.g. clause 6, wherein the determination occurs via a manifest for the content segment.
Clause 9: The method of any preceding clause, e.g. clause 8, wherein the determination occurs via a supplemental property field of the manifest.
Clause 10: The method of any preceding clause, e.g. clause 6, further comprising:
   causing the content segment in the other format to be encoded in response to the request.
Clause 11: The method of any preceding clause, e.g. clause 6, further comprising:
   receiving another request for another content segment;
   determining a user device associated with the request is implementing hot playback of content segments; and
   refraining from causing to be sent an encoded version of the other content segment.
Clause 12: The method of any preceding clause, e.g. clause 11, further comprising:
   causing to be sent the content segment in a format indicated in the other request, wherein the content segment is stored in the format indicated in the other request.
Clause 13: The method of any preceding clause, e.g. clause 11, wherein determining the user device associated with the request is implementing hot playback of content segments comprises identifying one or more previous content segments of a content profile associated with the other content segments; and
   determining of the one or more previous content segments were requested by the user device with a same formatting as the other content segment.
Clause 14: The method of any preceding clause, e.g. clause 11, wherein hot playback comprises implementing a recording and playback of content segments concurrently.
Clause 15: An apparatus, comprising:
   one or more processors, memory, and computer-executable instructions stored in the memory that, when executed, cause:
   receiving a request for a content segment, the request comprising an indication of a requested format of the content segment of a plurality of formats for the content segment;
   determining the requested format is to be sent as a just-in-time encoded format; and
   causing to be sent an encoded version of the content segment, wherein the encoded version of the content segment originates as another format of the plurality of formats, that is encoded in response to the request.
Clause 16: The apparatus of any preceding clause, e.g. clause 15, wherein determining the format is to be sent as the just-in-time encoded format further comprises determining the content segment is not stored in the requested format.
Clause 17: The apparatus of any preceding clause, e.g. clause 15, wherein the determination occurs via a manifest for the content segment.
Clause 18: The apparatus of any preceding clause, e.g. clause 17, wherein the determination occurs via a supplemental property field of the manifest.
Clause 19: The apparatus of any preceding clause, e.g. clause 15, wherein the computer-executable instructions, when executed, further cause the content segment in the other format to be encoded in response to the request.
Clause 20: The apparatus of any preceding clause, e.g. clause 15, wherein the computer-executable instructions, when executed, further cause:
   receiving another request for another content segment;
   determining a user device associated with the request is implementing hot playback of content segments; and
   refraining from causing to be sent an encoded version of the other content segment.
Clause 21: An apparatus, comprising:
   one or more processors, memory, and computer-executable instructions stored in the memory that, when executed, cause:
   sending a request for a content segment, the request comprising an indication of a requested format of the content segment of a plurality of formats for the content segment; and
   receiving an encoded version of the content segment, wherein the encoded version of the content segment originates as another format of the plurality of formats, that is encoded in response to the request.
Clause 22: An apparatus, system. or method for just-in-time encoding of uniquely recorded vide segments.
Clause 23: The apparatus, system. or method according to any of the preceding clauses, e.g. clause 22, wherein a content segment includes a plurality of versions, e.g. offered to a user device via a manifest file, wherein each version includes a different formatting characteristic, wherein the plurality of versions include at least one or two of a high bit rate version, a medium bitrate version, and a low bitrate version, wherein not all versions of the content segment are stored by the apparatus or system (e.g. only one or two versions are stored), wherein when a user device requests the content segment in a version other than the stored version, the apparatus or system retrieves the stored version from storage, and encodes the version of the content segment to generate or replicate the requested version of the content segment.
Clause 24: A non-transitory computer-readable medium storing instructions that, when executed by one or more processors, cause an apparatus or system to perform the method according to any of the preceding clauses.

It will be apparent to those skilled in the art that various modifications and variations may be made without departing from the scope or spirit of the present disclosure. Other embodiments will be apparent to those skilled in the art from consideration of the specification and practices described herein. It is intended that the specification and example figures be considered as exemplary only, with a scope being indicated by the following claims.

## Claims

1. A method comprising:
sending a request for a content segment, the request comprising an indication of a requested format of the content segment of a plurality of formats for the content segment; and
receiving an encoded version of the content segment, wherein the encoded version of the content segment originates as another format of the plurality of formats, that is encoded in response to the request.

2. The method of claim 1, wherein the requested format comprises a medium bit rate (MBR) format, or a low bit rate (LBR) format.

3. The method of claim 1 or 2, wherein the other format comprises a high bit rate (HBR) format.

4. The method of any of claims 1 - 3, wherein the content segment is not stored in the requested format.

5. The method of any of claims 1 - 4, wherein the content segment is stored in the other format.

6. A method, comprising:
receiving a request for a content segment, the request comprising an indication of a requested format of the content segment of a plurality of formats for the content segment;
determining the requested format is to be sent as a just-in-time encoded format; and
causing to be sent an encoded version of the content segment, wherein the encoded version of the content segment originates as another format of the plurality of formats, that is encoded in response to the request.

7. The method of claim 6, wherein determining the format is to be sent as the just-in-time encoded format further comprises determining the content segment is not stored in the requested format.

8. The method of claim 6 or 7, wherein the determination occurs via a manifest for the content segment.

9. The method of claim 8, wherein the determination occurs via a supplemental property field of the manifest.

10. The method of any of claims 6-9, further comprising:
causing the content segment in the other format to be encoded in response to the request.

11. The method of any of claims 6-9, further comprising:
receiving another request for another content segment;
determining a user device associated with the request is implementing hot playback of content segments; and
refraining from causing to be sent an encoded version of the other content segment.

12. The method of claim 11, further comprising:
causing to be sent the content segment in a format indicated in the other request, wherein the content segment is stored in the format indicated in the other request.

13. The method of claim 11 or 12, wherein determining the user device associated with the request is implementing hot playback of content segments comprises identifying one or more previous content segments of a content profile associated with the other content segments; and
determining of the one or more previous content segments were requested by the user device with a same formatting as the other content segment.

14. The method of any of claims 11 - 13, wherein hot playback comprises implementing a recording and playback of content segments concurrently.

15. An apparatus, comprising:
one or more processors, memory, and computer-executable instructions stored in the memory that, when executed, cause:
receiving a request for a content segment, the request comprising an indication of a requested format of the content segment of a plurality of formats for the content segment;
determining the requested format is to be sent as a just-in-time encoded format; and causing to be sent an encoded version of the content segment, wherein the encoded version of the content segment originates as another format of the plurality of formats, that is encoded in response to the request.
